# EUROPÄISCHE PATENTANMELDUNG

(11) **EP 0 676 556 A2**
(43) Veröffentlichungstag der Anmeldung: **11.10.1995**
(21) Anmeldenummer: 95104908.9
(22) Anmeldetag: 03.04.1995
(51) Int. Cl.: F16D 49/00, F16D 55/00, F16D 66/00

(54) **Aufsteckbremse**

(30) Priorität: 08.04.1994 DE 9405792 U
(71) Anmelder: Ingenieursbüro Helmut Sudhop, D-28211 Bremen (DE)
(72) Erfinder: Sudhop, Helmut, Dipl.-Ing., D-28357 Bremen (DE); Höhn, Carsten, Dipl.-Ing., D-28832 Achim (DE)

(57) **Zusammenfassung**

Eine Scheiben- oder Trommelbremse wird mit ihren Einzelteilen auf einem Bremsfuß (16) angeordnet und durch diesen Bremsfuß (16) in einem Festlager und einem Loslager statisch bestimmt gelagert.

Das Festlager ist als Stützlager (15) ausgebildet, durch das der Bremsfuß (16) auf dem Bremskörper (13) aufgesteckt ist und so Bremskörper (13) und Bremsfuß (16) zueinander verdrehbar sind, das Eigengewicht der Bremse jedoch durch dieses Lager aufgenommen wird.

Das Loslager ist eine Drehmomentenstütze, durch die dem Bremsmoment beim Bremsvorgang entgegengewirkt wird. Diese Drehmomentenstütze ist eine gelenkige Verbindung des Bremsfußes (16) mit einem Fixpunkt (22).

Da durch die Drehmomentenstütze das gesamte Bremsmoment aufgenommen wird, kann durch ein integriertes Bauelement, wie beispielsweise den Bolzen (17), die Größe des Bremsmomentes gemessen und durch eine elektronische Einheit ausgewertet und so die Funktionsfähigkeit der Aufsteckbremse ständig überwacht werden.

## Beschreibung

Die Erfindung betrifft die Befestigung und Anordnung einer Bremse für rotatorische Bewegungen gemäß dem Oberbegriff des Hauptanspruchs, die sowohl für Scheibenbremsen als auch für Trommelbremsen geeignet ist.

Scheiben- und Trommelbremsen herkömmlicher Bauart z. B. an Hebezeugen und Winden werden mittels Schraubverbindungen entweder auf einer Konsole oder direkt auf dem Hubwerksrahmen bzw. dem Fundament befestigt.

Die Bremsen lassen sich gut einbauen oder auswechseln, die Art und Weise ihrer Befestigung ist aber auch mit einer Reihe von Nachteilen behaftet. So ist nach EP 0 570 859 A1 eine Scheibenbremse bekannt, die auf einem stabilen Rahmen befestigt werden muß, um die bei dem angestrebten differenzierten Bremsvorgang auftretenden Kräfte verwindungsfrei übertragen zu können.

Im allgemeinen müssen bei Scheibenbremsen die Stützrahmen bzw. Stützkonsolen so steif ausgebildet sein, daß sie ohne weiteres die Stützkraft aufnehmen können, die sich als Haltekraft der Bremse beim Bremsvorgang ergibt. Besonders nachteilig ist auch, daß durch die Reaktionskraft aus der Stützkraft die rotierenden Maschinenteile, insbesondere die freien Wellenzapfen des Getriebes zusätzlich belastet werden. Deshalb erfordert der Einsatz einer herkömmlichen Scheibenbremse u. a. eine entsprechend stabile Auslegung der Getriebewellen, Lager und evtl. der ersten Zahnradstufe, was in der Regel erhebliche Mehrkosten verursacht.

Bei der Befestigung von Trommelbremsen auf Konsolen ergibt sich der Nachteil, daß eine sehr sorgfältige Ausrichtung der Bremse z. B. durch das Unterlegen von Ausgleichsblechen erforderlich ist. Da sich die geometrischen Verhältnisse zwischen Konsole und Triebwerkskette aufgrund von elastischen Formänderungen bei verschiedenen Belastungszuständen erheblich verändern kommt es sehr leicht, auch bei sorgfältiger Ausrichtung, zu Zwängungserscheinungen.
In der Praxis wird oftmals versucht, diesem unerwünschten Zustand durch großzügige Toleranzen zu begegnen. Das führt sehr häufig zu ungünstigen geometrischen Bedingungen und zu einem ungleichmäßigen Verschleiß, wodurch die Bremswirkung der Bremsen stark beeinträchtigt wird und es im Extremfall zum vorzeitigen Ausfall dieser Bremsen kommt.

Bei der bekannten Backenbremse nach EP 0 012 270 B1 ist ein besonders stabiler Rahmen erforderlich, weil einmal die Bremskräfte zwängungsfrei übertragen werden sollen, zum anderen erfordert die vorgesehene Kraftmeßeinrichtung eine solche stabile Lösung.

Der Erfindung liegt das Problem zugrunde, eine gemeinsame Lösung für eine Scheiben- und eine Trommelbremse zu schaffen, welche diese genannten Nachteile vermeidet.

Die Lösung dieser Problems erfolgt prinzipiell mit den Merkmalen des kennzeichnenden Teils des Hauptanspruchs.

Vorteilhafte Ausbildungen der Erfindung sind Gegenstand der Unteransprüche.

Die Bremsen beider Ausführungsformen werden jeweils auf einem Bremsfuß montiert und durch diesen statisch bestimmt durch ein Festlager und ein Loslager in zwei Punkten gelagert.
Der erste Befestigungspunkt ist ein Stützlager, durch welches die Verbindung zwischen Antriebswelle und Bremskörper hergestellt wird. Die Bremse wird so auf das freie Ende der Antriebswelle ähnlich einem Aufsteckgetriebe aufgesteckt. Die zweite Befestigung der Bremse ist ihre Verbindung in einem Abstand vom ersten Befestigungspunkt mit einem Festpunkt durch eine gelenkige Drehmomentenstütze.

Die Möglichkeit der Kombination einer Aufsteckbremse mit einer Kupplung in einer Wellenverbindung bleibt erhalten.

Die spezifischen Lösungen für Scheibenbremsen und für Trommelbremsen weisen keine prinzipiellen Unterschiede auf.

Diese Ausführung der Lagerung einer Bremse an der Bremsscheibe oder an der Bremstrommel hat zur Folge, daß sich die Haltekraft, die sich beim Bremsen als Reibungskraft aufbaut, direkt über die drehbare Lagerung wieder auf die Bremsscheibe oder die Bremstrommel überträgt. Es kommt zu einer Kompensation der Kräfte. Sie werden zu inneren Kräften der Aufsteckbremse und belasten somit die anderen Maschinenelemente nicht.
Die Drehmomentenstütze übernimmt die Reaktionskraft aus dem auftretenden Bremsmoment und verhindert somit ein Mitdrehen der Bremse. Die anderen Maschinenelemente werden nur durch diese Stützkraft als Reaktionskraft belastet.
Durch den vorgesehenen Abstand der Drehmomentenstütze vom Drehpunkt kann diese jedoch sehr klein gehalten werden. Ferner ist die Anordnung und Lage der Momentenstütze je nach Platzverhältnissen, sowie baulichen oder konstruktiven Gegebenheiten frei wählbar. Eine Konsole bzw. ein Platz für die Befestigung der Bremse auf dem Hubwerksrahmen ist nicht mehr erforderlich. Die Momentenstütze ist als Gelenklager mit Pendelstütze (Loslager) ausgebildet, um eine statisch bestimmte Lagerung zu gewährleisten. Dadurch entfallen zusätzlich auch sämtliche Ausrichtarbeiten, die bisher zur Justierung der Bremsen erforderlich sind. Außerdem kann die Rahmenkonstruktion einfacher und weniger biegesteif ausgeführt werden, weil die Fragen der Formänderung jetzt keine Rolle mehr spielen.
Vorhandene Scheiben- oder Trommelbremse herkömmlicher Bauart können problemlos gegen Aufsteckbremsen ausgetauscht werden.
Soll die Funktion der Bremse ständig überwacht werden, kann der Lagerbolzen der Momentenstütze ohne weiteres als Meßbolzen ausgeführt werden. Aufgrund des unveränderlichen Abstandes zum Drehpunkt der Aufsteckbremse entspricht das Meßergebnis immer der genauen Größe des tatsächlichen Bremsmomentes der Bremse, völlig unabhängig von äußeren Einflüssen und Verschleiß- bzw. Alterungsvorgängen an den Bremselementen Bremsklotz oder Bremsbacke beim Bremsvorgang.

Die Erfindung wird nachstehend an einem Ausführungsbeispiel für eine Scheibenbremse und eine Trommelbremse getrennt und mit Bezug auf die Zeichnungen näher erläutert, wobei
Fig. 1 eine Aufsteckscheibenbremse in Ansicht auf die vordere Planfläche der Antriebswelle,
Fig. 2 die Bremse nach Fig. 1 in der Draufsicht und in geschnittener Darstellung im Bereich der Antriebswelle,
Fig. 3 eine Aufstecktrommelbremse in der Ansicht auf die vordere Planfläche der Antriebswelle und
Fig. 4 die Bremse nach Fig. 3 mit den beiden Lagerungspunkten in geschnittener Darstellung zeigt.

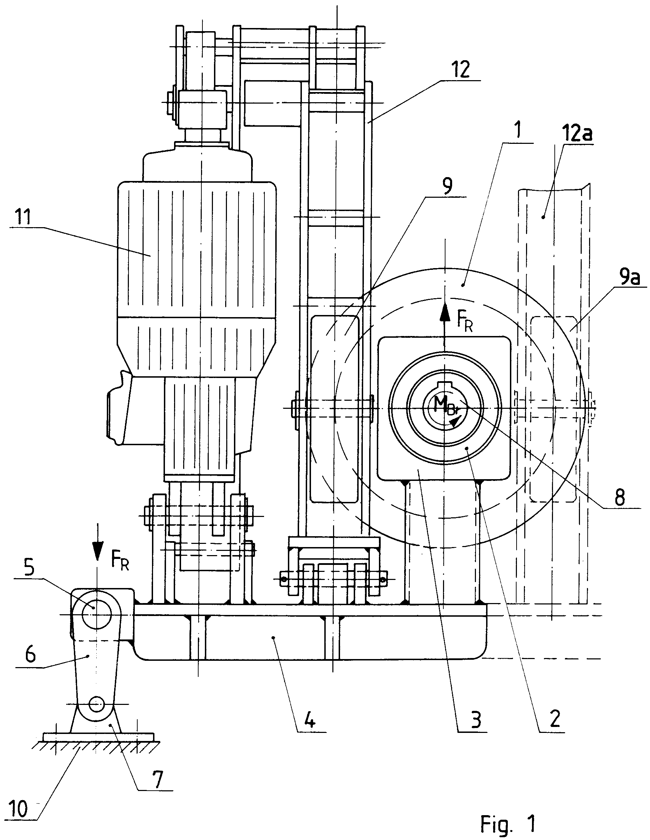

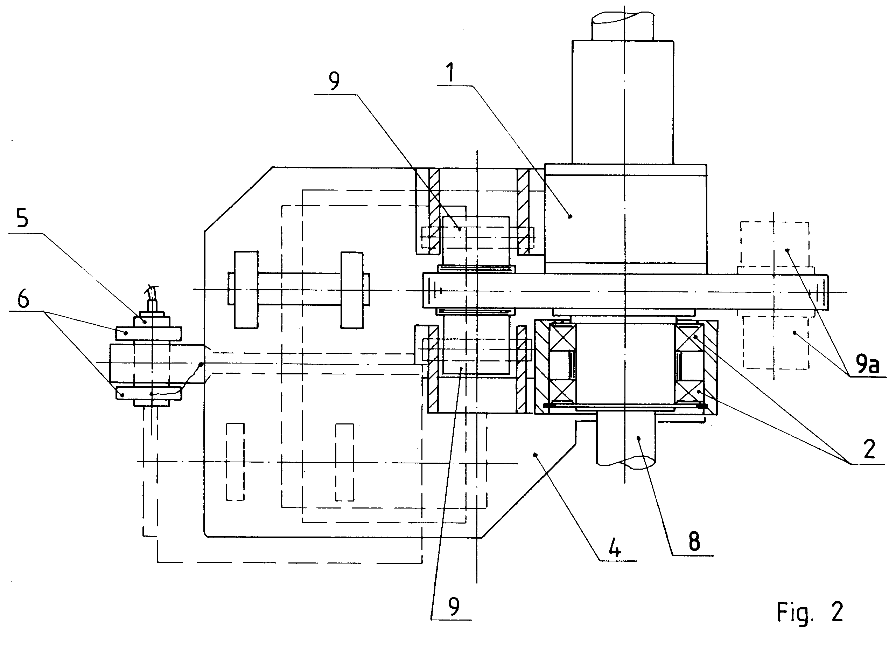

Bei der Aufsteckscheibenbremse nach den Figuren 1 und 2 sind die beiden Bremsklötze 9 in bekannter Weise auf die auf der Antriebswelle 8 verdrehfest aufgesteckten Bremsscheibe 1 ausgerichtet. Zum eigentlichen, aus bekannten Bauelementen bestehenden Bremsmechanismus gehören neben den Bremsklötzen 9 noch das Gestänge mit den Bremshebeln 12 und seinen aus Bolzen bestehenden Gelenken, einer Schließfeder sowie einem Lüftgerät als Betätigungselement 11. Dieser so ausgestattete Bremsmechanismus ist auf einem statisch bestimmt gelagerten Bremsfuß 4 untergebracht, wobei das eine Lager des Bremsfußes 4 von einem im Mittelpunkt der Bremsscheibe 1 vorgesehenen Stützlager 2 und das andere Lager von einer Drehmomentenstütze gebildet wird.
Durch das mit dem Bremsfuß 4 eine bauliche Einheit bildende Lagergehäuse 3 ist der Bremsfuß 4 mittels eines Wälzlagers im Stützlager 2 ähnlich einem bekannten Aufsteckgetriebe mit dem zur Bremsscheibe 1 gehörenden Wellenbund verbunden. Das zweite Lager des Bremsfußes, die Drehmomentenstütze, besteht aus einer als Lasche mit einer oberen und einer unteren Bohrung versehenen Pendelstütze 6, die einerseits durch einen Bolzen 5 mit dem Bremsfuß 4 und anderenseits durch einen weiteren Bolzen mit einem Lagerbock 7 verbunden ist.
Die durch die Eigenmasse der Aufsteckbremse wirkenden senkrechten Kräfte werden durch beide Lager aufgenommen, während dem Bremsmoment nur durch die Drehmomentenstütze entgegenwirkt wird.
Ausgehend davon, daß an der Drehmomentenstütze eine momentproportionale Kaft F_{R} geliefert wird, kann der Bolzen 5 als Meßbolzen ausgebildet werden, durch den das Bremsmoment ständig gemessen und somit die gesamte Bremse überwacht werden kann.
Alternativ ist die Anordnung einer zweiten Scheibenbremse möglich, deren Bremsklötze 9a entweder auf die andere, der ersten Bremse gegenüberliegenden Seite der Bremsscheibe 1 oder auf eine zweite, zusätzlich vorgesehene Bremsscheibe 1a einwirken. Erstere Möglichkeit ist in der Zeichnung nach Fig. 1 in unterbrochenen Linien dargestellt und die Bezugszeichen der zusätzlichen Teile mit dem Buchstaben a versehen. Aus der Zeichnung ist auch erkennbar, daß die dafür erforderliche Verlängerung des Bremsfußes 4 nach der unterbrochenen Linienführung ohne weiteres möglich ist.

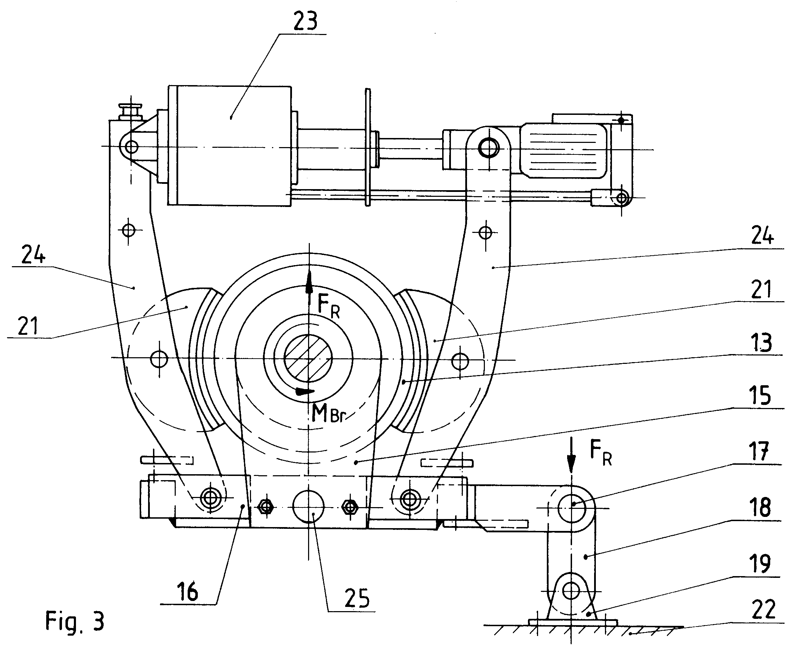

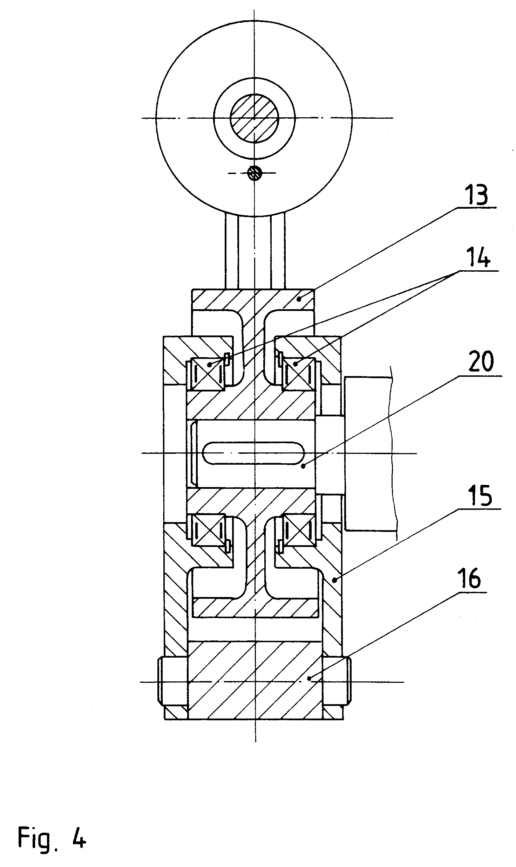

Eine Aufstecktrommelbremse wird wird im Prinzip ähnlich ausgeführt. In der Zeichnung nach den Figuren 3 und 4 ist ein mögliches Beispiel dargestellt.
Analog zur Aufsteckscheibenbremse ist die Bremstrommel 13 durch ein aus zwei Wälzlagern 14 und zwei Lagergehäusen 15 bestehendes Stützlager mit dem Bremsfuß 16 verbunden und bilden so als Festlager das erste von zwei Lagern des statisch bestimmten Systems des Bremsfußes 16.
Alle übrigen Teile der Aufstecktrommelbremse wie Bremsbacken 21, Schließfeder, Lüfter als Betätigungselement 23 und die Bremshebel 24 entsprechen den standartisierten Bremstypen.
Die gelenkige Drehmomentenstütze besteht als zweites Lager, dem Loslager des Bremsfußes 16 wie im Ausführungsbeispiel für eine Aufsteckscheibenbremse aus einem Bolzen 17 und der gelenkig mit dem Lagerbock 19 verbundenen Pendelstütze 18. So wird ein Mitdrehen der Bremse beim Bremsvorgang verhindert.
Das entstehende Bremsmoment M_{Br} wird durch die statisch bestimmte Lagerung in ein Kräftepaar F_{R} umgewandelt. Diese Haltekraft F_{R} wird durch die Drehmomentenstütze aufgenommen und ist durch den Bolzen 17 meßbar, wenn er als Kraftmeßbolzen ausgebildet wird.
Durch eine Scherbolzen-/Schraubenverbindung 25 ist die Bremstrommel 13 mit den Wälzlagern 14 und den Lagergehäusen 15 fest mit dem Bremsfuß verbunden. Somit bilden diese und die übrigen Teile der Bremse eine konstruktive Einheit. Eine ähnliche Bolzen-/Schraubenverbindung ist auch für Aufsteckscheibenbremsen möglich.

| **Bezugszeichen** | | |
|---|---|---|
| - für die Scheibenbremse | - für die Trommelbremse | allgemeine Bezeichnung |
| 1 Bremsscheibe | 13 Bremstrommel | Bremskörper |
| 2 Stützlager | 14 Stützlager | Stützlager |
| 3 Lagergehäuse | 15 Lagergehäuse | Lagergehäuse |
| 4 Bremsfuß | 16 Bremsfuß | Bremsfuß |
| 5 Bolzen | 17 Bolzen | Kraftmeßgeber |
| 6 Pendelstütze | 18 Pendelstütze | Pendelstütze |
| 7 Lagerbock | 19 Lagerbock | Lagerbock |
| 8 Antriebswelle | 20 Antriebswelle | Antriebswelle |
| 9 Bremsklotz | 21 Bremsbacke | Bremselement |
| 10 Grundrahmen | 22 Grundrahmen | Fixpunkt |
| 11 Betätigunselement | 23 Betätigungselement | Betätigungselement |
| 12 Bremshebel | 24 Bremshebel | Bremshebel |
| | 25 Scherbolzen-/Schraubenverbindung | |

## Patentansprüche

1. Aufsteckbremse, die entweder als Scheibenbremse oder als Trommelbremse ausgebildet ist, bestehend aus einem zu bremsenden, auf einer Antriebswelle verdrehfest angeordneten runden Bremskörper, aus auf diesen runden Körper im Bremsvorgang einwirkenden Bremselementen, die über ein Hebelsystem von einem Betätigungselement beim Bremsvorgang an den Bremskörper gedrückt werden, und aus aus Befestigungen zur Aufnahme der Bremskraft, gekennzeichent dadurch, daß die Einzelteile Bremskörper (1,13), Bremshebel (12,24) und Betätigungselement (11,23) der Bremse auf einem Bremsfuß (4,16) angeordnet sind und der Bremsfuß (4,16) durch ein Festlager und ein Loslager statisch bestimmt gelagert wird, wobei das Festlager einerseits von der Verbindung des Bremsfußes (4,16) mit der abzubremsenden Welle (8,20) durch ein dazwischen angeordnetes Stützlager (2,14) gebildet wird, das die Last der Aufsteckbremse aufnimmt, jedoch die Drehbewegung der Antriebswelle (8,20) gestattet und anderenseits das Loslager des Bremsfußes (4,16) eine Drehmomentenstütze ist, die in einem Abstand vom Stützlager (2,14) an einem neutralen Fixpunkt (10,22), der nicht zur Bremse gehört, befestigt ist und so drehbar gelagerter Bremskörper (1,13) und Bremsfuß (4,16) mit den Betätigungselementen eine gemeinsame formschlüssig miteinander verbundene konstruktive Einheit bilden und das Stützlager (2,14) aus einem Lager besteht, das mit seinem Innenring entweder mit dem Bremskörper (1,13) oder der abzubremsenden Welle (8,20) und mit seinem Außenring mit dem zum Bremsenfuß (4,16) gehörenden Lagergehäuse (3,15) verbunden ist und so die Bremse getragen wird, ohne die Drehbewegung der abzubremsenden Welle (8,20) einzuschränken.

2. Aufsteckbremse nach Anspruch 1, dadurch gekennzeichnet, daß zur gleichmäßigen Verteilung der Kräfte beiderseits des Bremskörpers (1,13) je ein Lager bzw. die einseitige Anordnung eines Lagerpaares auf dem Bremskörper (1,13) vorgesehen ist.

3. Aufsteckbremse nach Anspruch 1, dadurch gekennzeichnet, daß die Aufsteckbremse mit einer in den Bremskörper (1,13) integrierte Kupplung versehen werden kann.

4. Aufsteckbremse nach Anspruch 1, dadurch gekennzeichnet, daß die Momentenstütze aus einer Pendelstütze (6) besteht, die jeweils über Bolzenverbindungen einerseits mit dem Bremsfuß (4,16) und anderenseits mit einem Lagerbock (7,19) gelenkig verbunden sind und einer der beiden Bolzen als Kraftmeßgeber (5,17) ausgebildet ist.

5. Aufsteckbremse nach Anspruch 1, dadurch gekennzeichnet, daß bei einer Ausbildung als Scheibenbremse alternativ auf einem gemeinsamen Bremsenfuß (4) vorzugsweise symmetrisch zueinander ein weiteres Paar Bremsklötze (9a) mit Bremshebeln (12a) angeordnet ist, das entweder durch das gleiche Betätigungselement (11) wie das erste Paar Bremsklötze (9) oder durch ein separates Betätigungselement (11a) in funktionelle Verbindung mit der Bremsscheibe (1) gebracht werden kann.
